# EUROPEAN PATENT APPLICATION

(11) **EP 4 712 205 A1**
(43) Date of publication of application: **18.03.2026**
(21) Application number: 25182208.6
(22) Date of filing: 12.06.2025
(51) Int. Cl.: H01M 10/48, H01M 50/507, H01M 50/569

(54) **CONNECTING TERMINAL FOR ACQUISITION WIRE HARNESS, BATTERY MODULE AND POWER-CONSUMING DEVICE**

(30) Priority: 12.09.2024 CN 202422242943 U
(71) Applicant: Eve Energy Co., Ltd., Huizhou, Guangdong 516006 (CN)
(72) Inventor: YANG, Qi, Huizhou, Guangdong, 516006 (CN)
(74) Representative: Berggren Oy

(57) **Abstract**

The present application discloses a connecting terminal for acquisition wire harness, a battery module, and a power-consuming device. The connecting terminal for acquisition wire harness includes an intermediate connecting portion, a wire harness connecting portion, and a busbar connecting portion. The intermediate connecting portion is fixedly connected to the wire harness connecting portion and the busbar connecting portion. The wire harness connecting portion and the acquisition wire harness are pressed and fixed. The busbar connecting portion is clampable to an accommodating portion preset on a busbar.

## Description

### TECHNICAL FIELD

The present application relates to technical field of power batteries, and more particularly, to a connecting terminal for acquisition wire harness, a battery module including the connecting terminal for acquisition wire harness, and a power-consuming device including the battery module.

### BACKGROUND

In new energy automobiles, a power supply needs to collect voltage and temperature of a single battery through an acquisition terminal, and monitor information of the single battery in real time. The acquisition terminal for the power battery acquires the information of the single battery, and the accuracy of the acquired information of the single battery affects the normal safe running of the vehicle. In electrical automobile industry, the stability and productivity efficiency of the acquired data are the focus of the original equipment manufacturers.

In related arts, when acquiring a voltage of a power battery for an automobile, a flag-shaped connector is usually used for connection between a wire harness and a busbar. The connector is easily loosened during vibration of the automobile, as a result, a contact internal resistance is increased, and thus acquiring abnormal data. It is necessary to pull the flag-shaped connector out and insert the flag-shaped connector again. However, too many times for pulling out and inserting are easy to cause looseness, thus, causing acquisition abnormalities such as acquisition failure occur.

### SUMMARY

The present application provides a connecting terminal for acquisition wire harness, a battery module, and a power-consuming device. A connection between the connecting terminal for acquisition wire harness and a busbar is more stable, and the connecting terminal for acquisition wire harness is not easily loosened during vibration of the power-consuming device, thereby effectively reducing a probability of an acquisition abnormality such as acquisition failure.

According to a first aspect, embodiments of the present application provide a connecting terminal for acquisition wire harness. The connecting terminal for acquisition wire harness has electrical conductivity, and includes an intermediate connecting portion, a wire harness connecting portion, and a busbar connecting portion. The intermediate connecting portion is fixedly connected to the wire harness connecting portion and the busbar connecting portion, the wire harness connecting portion and the acquisition wire harness are pressed and fixed, and the busbar connecting portion is clampable to an accommodating portion preset on a busbar.

According to a second aspect, embodiments of the present application provide a battery module including a plurality of square cells, a plurality of busbars, and a plurality of connecting terminals for acquisition wire harness. The busbar is connected to poles of the plurality of square cells. The busbar is provided with accommodating portions, and the busbar connecting portion of the connecting terminal wire harness connecting is clamped to the accommodating portion.

According to a third aspect, embodiments of the present application provide a power-consuming device including a mounting base and the battery module, and the battery module is mounted on the mounting base.

### BRIEF DESCRIPTION OF THE DRAWINGS

FIG. 1 is a schematic diagram of an assembly structure of a connecting terminal for acquisition wire harness, an acquisition wire harness and a busbar according to an embodiment of the present application.
FIG. 2 is a schematic exploded diagram of a connecting terminal for acquisition wire harness, an acquisition wire harness and a busbar according to an embodiment of the present application.
FIG. 3 is a schematic structural diagram of a connecting terminal for acquisition wire harness according to an embodiment of the present application.
FIG. 4 is a schematic side diagram of the acquisition harness connection terminal in a direction P in FIG. 3 according to an embodiment of the present application.
FIG. 5 is a schematic partially enlarged diagram of part A in FIG. 3.
FIG. 6 is a schematic partial diagram of a battery module according to an embodiment of the present application.
FIG. 7 is a schematic partially exploded diagram of a battery module according to an embodiment of the present application.
FIG. 8 is a schematic partially enlarged diagram of part B in FIG. 7.

In the drawings:
100. connecting terminal for acquisition wire harness; 110. intermediate connecting portion; 120. wire harness connecting portion; 130. busbar connecting portion; 131. abutting plate; 1311. window; 132. intermediate connecting plate; 133. abutting portion;
200. acquisition wire harness;
300. busbar; 310. accommodating portion; 320. guide ramp;
400. square cell; and 410. pole

### DETAILED DESCRIPTION OF THE EMBODIMENTS

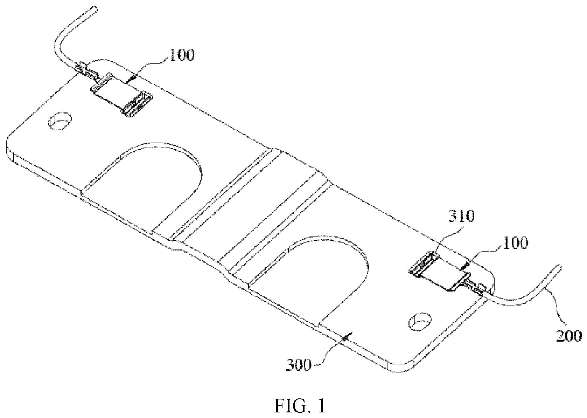

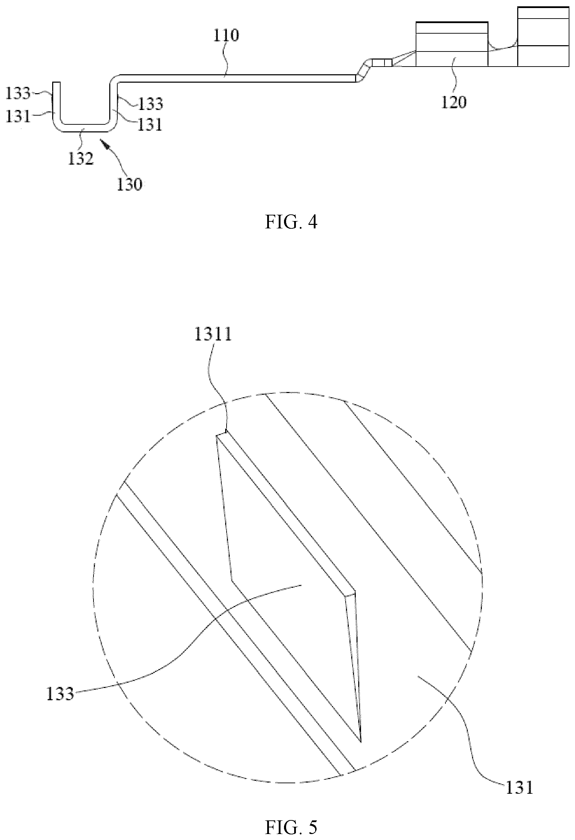

As shown in FIG. 1 to FIG. 5, a connecting terminal for acquisition wire harness 100 of the present embodiments has conductivity, and includes an intermediate connecting portion 110, a wire harness connecting portion 120, and a busbar connecting portion 130. The intermediate connecting portion 110 is fixedly connected to the wire harness connecting portion 120 and the busbar connecting portion 130. The acquisition wire harness 200 and the wire harness connecting portion 120 are pressed and fixed. The busbar connecting portion 130 can be clamped to an accommodating portion 310 preset on a busbar 300.

In the present embodiments, the accommodating portion 310 is preset on the busbar 300, and the busbar connecting portion 130 is clamped in the accommodating portion 310 to realize a fixed connection. Compared with the related arts, the connection between the connecting terminal for acquisition wire harness 100 and the busbar 300 is stable, and the connecting terminal for acquisition wire harness 100 is not easily loosened in a vibration of a power-consuming device such as a new energy automobile, thereby effectively reducing a probability of an acquisition abnormality such as acquisition failure.

The busbar connecting portion 130 is clamped and welded to the accommodating portion 310, to further improve the connection stability between the connecting terminal for acquisition wire harness 100 and the busbar 300. **In** other embodiments, the busbar connecting portion 130 and the accommodating portion 310 may be fixed by conductive adhesive after being clamped, that is, the busbar connecting portion 130 and the accommodating portion 310 are clamped, and then the conductive adhesive is filled in the accommodating portion 310, so as to further improve the connection stability between the connecting terminal for acquisition wire harness 100 and the busbar 300.

Alternatively, the accommodating portion 310 has a pair of two opposite chamber walls, and the busbar connecting portion 130 has a pair of two opposite outer side walls. When the busbar connecting portion 130 is clamped with the accommodating portion 310, the pair of two opposite outer side walls abut against the pair of two opposite chamber walls of the accommodating portion 310. According to this structure, the busbar connecting portion 130 can be clamped in the accommodating portion 310, and then a welding process is implemented after a stable clamping. The cooperation of the clamping and the welding effectively improves the connection stability between the connecting terminal for acquisition wire harness 100 and the busbar 300.

In other embodiments, the accommodating portion 310 has a rectangular cross section, and the accommodating portion 310 has two pairs of two opposite chamber walls. Correspondingly, the busbar connecting portion 130 has two pairs of two opposite outer side walls. When the busbar connecting portion 130 is clamped with the accommodating portion 310, the two pairs of two opposite outer side walls are in one-to-one contact with the two pairs of two opposite chamber walls of the accommodating portion 310, respectively. Certainly, the cross section of the accommodating portion 310 is not limited to a rectangular structure, but may be a polygonal structure, such as a diamond structure or a hexagonal structure. Details are not described in detail.

Illustratively, the busbar connecting portion 130 includes two abutting plates 131 and one intermediate connecting plate 132, the two abutting plates 131 are provided at intervals and parallel to each other, and the two abutting plates 131 respectively vertically connected with the intermediate connecting plate 132. One of the two abutting plates 131 is connected to the intermediate connecting portion 110, and an outer side wall of one of the two abutting plates 131 facing away from the other one of the two abutting plates 131 is abutted to one of the two opposite chamber walls of the accommodating portion 310.

The two abutting plates 131 are parallel to each other and connected by the intermediate connecting plate 132. The outer side walls of the two abutting plates 131 abut the two opposite chamber walls of the accommodating portion 310, respectively, and the chamber walls squeeze the two abutting plates 131 to a certain extent. As such, the two abutting plates 131 always maintain an abutting force against the chamber walls so as to clamp the accommodating portion 310 with the accommodating portion 310.

The busbar connecting portion 130 further includes an abutting portion 133. The abutting portion 133 protrudes from a side of one of the two abutting plates 131 facing away from the other one of the two abutting plates 131. When the busbar connecting portion 130 is inserted into the accommodating portion 310, one of the two chamber walls of the accommodating portion 310 abuts against the abutting portion 133 to clamp firmly the busbar connecting portion 130. Further, at least one of the two abutting plates 131 provides a window 1311 extending through the thickness direction thereof, and the abutting portion 133 is connected to an edge of the window 1311. When the busbar connecting portion 130 is inserted into the accommodating portion 310, one of the two chamber walls of the accommodating portion 310 abuts against the abutting portion 133 to position partially the abutting portion 133 in the window 1311. A size of the window 1311 is not less than a size of the abutting portion 133.

According to the present embodiments, the window 1311 is provided on the abutting plate 131, and the abutting portion 133 is connected with the edge of the window 1311. When the busbar connecting portion 130 is inserted into the accommodating portion 310 to clamp with the chamber walls of the accommodating portion 310, the abutting portion 133 is squeezed by the chamber wall, and the abutting portion 133 rotates about a position connecting with the edge of the window 1311 as an axis. As a rotating angle increases, the abutting force of the abutting portion 133 against the chamber wall increases gradually, thereby further improving the stable abutment of the busbar connecting portion 130 and the accommodating portion 310. Here, the size of the window 1311 is not less than the size of the abutting portion 133, so that the abutting portion 133 can be partially positioned in the window 1311 when being squeezing by the chamber wall. The window 1311 provides a movable space for the abutting portion 133.

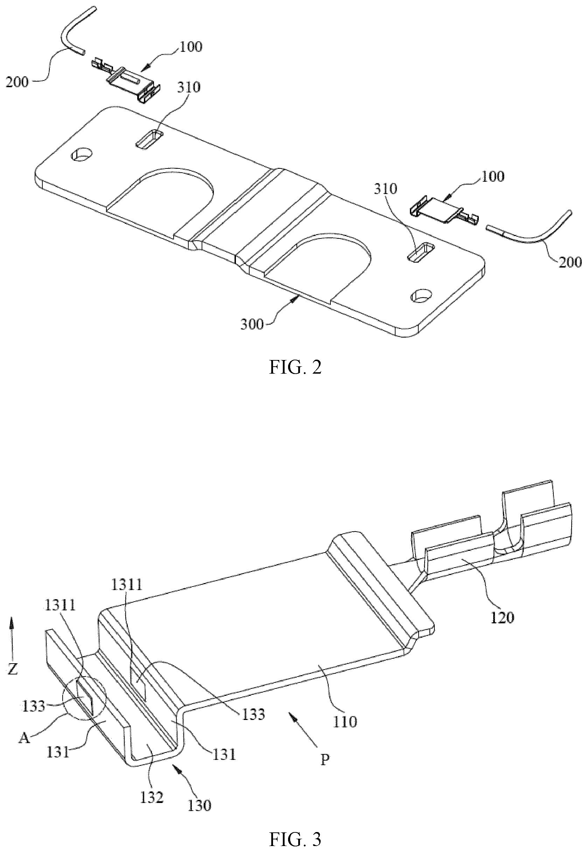

Illustratively, one of the two abutting plates 131 is connected to the intermediate connecting portion 110, and the other of the two abutting plates 131 is provided with the window 1311 of the above-described embodiments for connecting the abutting portion 133. Certainly, in other embodiments, the window 1311 may be provided on the abutting plate 131 directly connected to the intermediate connecting portion 110, to connect the abutting portion 133. Alternatively, as shown in FIG. 3, two windows 1311 are provided on the two abutting plates 131 respectively, and each of the two windows 131 connects one of the two abutting portions 133.

The busbar connecting portion 130 has a U-shaped structure. The busbar connecting portion 130 is located at a side of the intermediate connecting portion 110 toward the busbar 300. In the Z direction, an end of the abutting portion 133 close to the intermediate connecting plate 132 is connected to the edge of the window 1311 close to the intermediate connecting plate 132, and the other end of the abutting portion 133 is inclined toward the direction away from the intermediate connecting plate 132.

As shown in FIG. 3, in the Z direction, the end of the abutment portion 133 close to the intermediate connecting plate 132 is a lower end of the abutting portion 133 in FIG. 3, and the window edge of the window 1311 close to the intermediate connecting plate 132 is a lower edge of the window 1311 in FIG. 3. The lower end of the abutting portion 133 is connected to the lower edge of the window 1311, and the other end of the abutting portion 133 is inclined toward the direction away from the intermediate connecting plate 132, so that the busbar connecting portion 130 can be inserted into the accommodating portion 310 from the above of the busbar 300 in FIG. 2, and clamped with the accommodating portion 310.

In the present embodiments, the connecting terminal for acquisition wire harness 100 is made of nickel, and the connecting terminal for acquisition wire harness 100 can be integrally stamped and bent by a nickel sheet. As such, the stability of the connecting terminal for acquisition wire harness 100 can be improved. As the nickel has a low cost, it effectively reduces the cost of the connecting terminal for acquisition wire harness 100 compared with the conventional connection of the busbar 300 and the acquisition wire harness 200 by a flag-shaped connector.

In the present embodiments, after the wire harness connecting of the connecting terminal for acquisition wire harness 100 being pressed and connected, the tension value thereof is not less than 50N, which ensures the reliability of the connection between the connecting terminal for acquisition wire harness 100 and the acquisition wire harness 200. The busbar connecting portion 130 is clamped and welded to the accommodating portion 310 of the busbar 300, to improve the accuracy and reliability of the welding. After welding, the shear force is greater than 200N and the peeling force is greater than 40N.

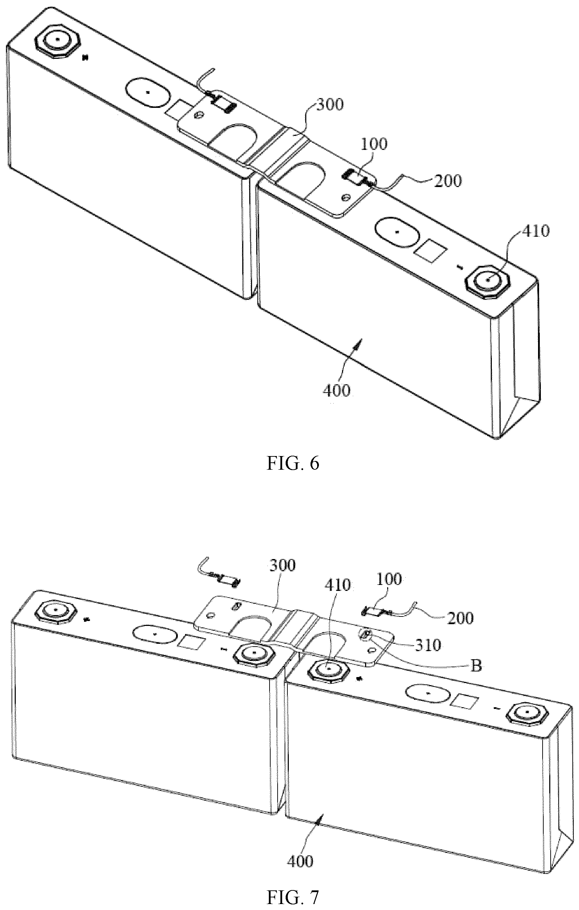

As shown in FIG. 6 and FIG. 7, the present embodiments further provide a battery module including a plurality of square cells 400, a plurality of busbars 300, and a plurality of connecting terminals for acquisition wire harness 100 as described above. The plurality of busbars 300 is connected to poles 410 of the plurality of square cells 400, and is provided with accommodating portions 310. The busbar connecting portion 130 of the connecting terminal for acquisition wire harness 100 is clamped to the accommodating portion 310.

Illustratively, the plurality of square cells 400 are arranged in an array. In two adjacent square cells 400, a positive pole of one square cell 400 and a negative pole of the other square cell 400 are welded to one busbar 300 at the same time. The busbar 300 is provided with two accommodating portions 310 in one-to-one correspondence with the two square cells 400. The two connecting terminals for acquisition wire harness 100 are respectively clamped to the two accommodating portions 310, and are further respectively fixed to the two accommodating portions 310 by welding after the clamping.

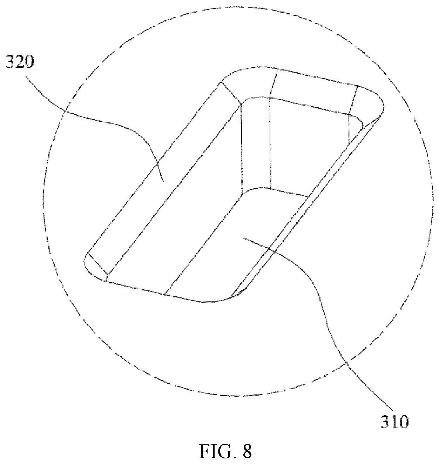

As shown in FIG. 8, the accommodating portion 310 is a through-hole extending through the busbar 300 in the thickness direction. As the nickel sheet is relatively thin, the through-hole is more convenient and efficient to provide than a groove.

In order to smoothly insert the busbar connecting portion 130 of the connecting terminal for acquisition wire harness 100 into the through-hole, the through-hole is designed in the present embodiments to have a guide ramp 320 at edges toward the busbar connecting portion 130, and the busbar connecting portion 130 can be quickly inserted into the through-hole along the guide ramp 320 for further being clamped.

The present embodiments further provide a power-consuming device including a mounting base and a battery module according to the above embodiments. The battery module is mounted on the mounting base. The power-consuming device may be a new energy automobile, and the battery module is mounted on a chassis (i.e., the mounting base) of the new energy automobile. It reduces the probability of influencing the connection stability between the connecting terminal for acquisition wire harness 100 and the busbar 300 in the battery module due to the vibration generated during the running of the new energy automobile.

According to the present application, an accommodating portion is preset on a busbar, and the busbar connecting portion is clamped to the accommodating portion so that the busbar connecting portion is connected to the busbar. Compared with the related arts, the connection between the connecting terminal for acquisition wire harness is more stable, and the collecting wire harness connecting terminal is not easily loosened in a vibration of a power-consuming device such as a new energy automobile, thereby effectively reducing a probability of an acquisition abnormality such as acquisition failure.

The busbar connecting portion of the present application is fixedly connected to the busbar by welding after being clamped to the accommodating portion, thereby further improving the connection stability between the busbar connecting portion and the busbar.

The connecting terminal for acquisition wire harness is simple in structure, reliable in connection, and low in cost.

The connecting terminal for acquisition wire harness, the battery module including the connecting terminal for acquisition wire harness, and the power-consuming device including the battery module provided in the embodiments of the present application are described in detail above. The principles and embodiments of the present application are described in detail herein. The description of the embodiments is merely intended to understand the technical solutions and core ideas of the present application. Those with ordinary skill in the art will appreciate that they may still modify the technical solutions described in the foregoing embodiments, or equivalently replace some of the technical features therein. These modifications or substitutions do not deviate the nature of the respective solutions from the scope of the solutions of the embodiments of the present application.

## Claims

1. A connecting terminal for acquisition wire harness (100), **characterized by** having conductivity and comprising an intermediate connecting portion (110), a wire harness connecting portion (120), and a busbar connecting portion (130); wherein the intermediate connecting portion (110) is connected to the wire harness connecting portion (120) and the busbar connecting portion (130), the wire harness connecting portion (120) is fixed to the acquisition wire harness (200), and the busbar connecting portion (130) is clampable to an accommodating portion (310) preset on a busbar (300).

2. The connecting terminal for acquisition wire harness (100) according to claim 1, wherein the busbar connecting portion (130) is clamped and welded to the accommodating portion (310) ; optionally, the busbar connecting portion (130) is clamped to the accommodating portion (310) and is further fixed to the accommodating portion (310) by a conductive adhesive.

3. The connecting terminal for acquisition wire harness (100) according to claim 2, wherein the busbar connecting portion (130) and the accommodating portion (310) are clamped, and the conductive adhesive is filled in the accommodating portion (310) to fix the busbar connecting portion (130) to the accommodating portion (310).

4. The connecting terminal for acquisition wire harness (100) according to any one of claims 1 to 3, wherein the accommodating portion (310) has at least one pair of two opposite chamber walls, and the busbar connecting portion (130) has at least one pair of two opposite outer side walls; and in case that the busbar connecting portion (130) is clamped to the accommodating portion (310), the at least one pair of two opposite outer side walls of the busbar connecting portion (130) abuts against the at least one pair of two opposite chamber walls of the accommodating portion (310).

5. The connecting terminal for acquisition wire harness (100) according to any one of claims 1 to 4, wherein the busbar connecting portion (130) comprises two abutting plates (131) and one intermediate connecting plate (132), the two abutting plates (131) are provided at intervals and parallel to each other, the two abutting plates (131) are respectively vertically connected to the intermediate connecting plate (132), one of the two abutting plates (131) is connected to the intermediate connecting portion (120), and an outer side wall of one of the two abutting plates (131) facing away from another one of the two abutting plates (131) is abutted to one of the two opposite chamber walls of the accommodating portion (310).

6. The connecting terminal for acquisition wire harness (100) according to claim 5, wherein the busbar connecting portion (130) further comprises a abutting portion (133), the abutting portion (133) protrudes from a side of one of the two abutting plates (131) facing away from another one of the two abutting plates (131); in case that the busbar connecting portion (130) is inserted into the accommodating portion (310), one of the two opposite chamber walls of the accommodating portion (310) abuts against the abutting portion (133) to clamp firmly the busbar connecting portion (130).

7. The connecting terminal for acquisition wire harness (100) according to claim 6, wherein at least one of the two abutting plates (131) provides a window (1311) extending through in a thickness direction thereof, and the abutting portion (133) is connected to an edge of the window (1311); in case that the busbar connecting portion (130) is inserted into the accommodating portion (310), one of the two opposite chamber walls of the accommodating portion (310) abuts against the abutting portion (133) to position partially the abutting portion (133) in the window (1311); and a size of the window (1311) is not less than a size of the abutting portion (133).

8. The connecting terminal for acquisition wire harness (100) according to claim 7, wherein the window (1311) is provided on the one of the two abutting plates (131) connected to the intermediate connecting portion (132).

9. The connecting terminal for acquisition wire harness (100) according to claim 7, wherein the window (1311) is provided on another one of the two abutting plates (131).

10. The connecting terminal for acquisition wire harness (100) according to claim 7, wherein each of the two abutting plates (131) is provided with the window (1311).

11. The connecting terminal for acquisition wire harness (100) according to claim 7, wherein the busbar connecting portion (130) is of a U-shaped structure, the busbar connecting portion (130) is located at a side of the intermediate connecting portion (120) toward the busbar (200); in a Z direction, an end of the abutting portion (133) close to the intermediate connecting plate (132) is connected to the edge of the window (1311) close to the intermediate connecting plate (132), and another end of the abutting portion (133) is inclined toward a direction away from the intermediate connecting plate (132).

12. The connecting terminal for acquisition wire harness according to any one of claims 1 to 11, wherein the connecting terminal for acquisition wire harness (100) is integrally stamped and bent by a nickel sheet.

13. A battery module, **characterized by** comprising a plurality of square cells (400), a plurality of busbars (300), and a plurality of the connecting terminals for acquisition wire harness (100) according to any one of claims 1 to 12, wherein the plurality of square cells (400) are arranged in an array, a positive pole of one square cell of two adjacent square cells of the plurality of square cells (400) and a negative pole of another square cell of the two adjacent square cells (400) are welded to one of the plurality of busbars (300), the busbar (300) is provided with two accommodating portions (310) in one-to-one correspondence with the two adjacent square cells (400), and two of the plurality of connecting terminals for acquisition wire harness (100) are respectively clamped to the two accommodating portions (310).

14. The battery module according to claim 13, wherein the accommodating portion (310) is a through-hole extending through the busbar (300) in a thickness direction, the through-hole has a guide ramp (310) at edges toward the busbar connecting portion (130), and the busbar connecting portion (130 )is inserted into the through-hole along the guide ramp (310) for further being clamped.

15. A power-consuming device, **characterized by** comprising a mounting base and the battery module according to any one of claims 13 to 14, wherein the battery module is mounted on the mounting base.
